# EUROPEAN PATENT APPLICATION

(11) **EP 2 053 870 A1**
(43) Date of publication of application: **29.04.2009**
(21) Application number: 07721408.8
(22) Date of filing: 11.06.2007
(51) Int. Cl.: H04Q 7/22, H04Q 7/38, H04Q 7/32, H04Q 7/30

(54) **METHOD FOR CONTROLLING SERVICE CELL UPDATING**

(30) Priority: 18.08.2006 CN 200610062220; 30.12.2006 CN 200610130769
(71) Applicant: Huawei Technologies Co., Ltd., Longgang District, Shenzhen Guangdong 518129 (CN)
(72) Inventor: YE, Huanqiu, Guangdong 518129 (CN)
(74) Representative: Körber, Martin Hans
(86) International application number: PCT/CN2007/001835
(87) International publication number: WO 2008/022523

(57) **Abstract**

A method and apparatus for updating a serving cell includes: receiving a Radio Link, RL, SETUP REQUEST including a serving cell update time from Radio Network Controller, RNC; and; handing off a Node B cell into a serving cell at the update time according to the Radio Link SETUP REQUEST. The present invention simplifies the signaling flow of the target Node B, fully meets the requirements of the prior art in terms of functions, improves the processing speed of the serving cell, and shortens the delay of the signaling processing of the whole system without affecting the service throughput and soft switch. The decrease on the interaction signalings saves the transmit resources.

## Description

The present invention claims the priority of Chinese Applications No. 200610062220.2, entitled "Method and Apparatus for Updating Serving Cell" filed wi th the Chinese Patent Office on December 30, 2006 and No. 200610130769.0, entitled "Method and Apparatus for Updating Serving Cell", the contents of which are incorporated herein by reference in its entirety.

### Field of the Invention

The present invention relates to the mobile communication field, and in particular, to a method and apparatus for updating serving cell.

### Background of the Invention

High speed downlink packet access (HSDPA) is a technology for improving the downlink data rate put forward in 3GPP R5 to meet asymmetrical requirements of uplink/downlink data services. It is considered to be the next step in evolution of a wideband code division multiple access (WCDMA) system and can improve the transmission rate for downloading data to 14.4 Mbps based on the prior WCDMA architecture. The technology is an important one for improving the downlink capacity and the rate of data services in the later stage in building a WCDMA network. It realizes sharing of HSDPA in channel code and transmit power, and adopts technologies such as adaptive modulation code (AMC), hybrid automatic repeat request (HARQ) and fast scheduling to further improve the data rate. In this way, HSPDA greatly improves the system capacity, spectral efficiency and quality of service (QoS).

In the HSDPA system, a high speed downlink shared channel (HS-DSCH) is adapted to transmit user data. An HS-DSCH can transmit data of multiple users. All users carried on the HS-DSCH can share the HS-DSCH by time and channel codes. An HS-DSCH transmits data every 2 ms, that is, the transmission time interval (TTI) is 2 ms. Different users can transmit data at different TTIs or transmit data at the same TTI by using different channel codes.

In the HSDPA physical layer, a high speed physical downlink shared channel (HS-PDSCH) and a shared control channel for HS-DSCH (HS-SCCH) are added on the downlink, and a dedicated physical control channel for HS-DSCH (HS-DPCCH) is added on the uplink. HSDPA does not support soft handoff, that is, the HS-PDSCH of only one cell transmits data to each user equipment (UE). Therefore, the cell is called an HSDPA serving cell.

After HSDPA is introduced, high speed uplink packet access (HSUPA) is also introduced to avoid shortage of uplink capacity caused by increase of load on the downlink, to further improve the average uplink throughput and capacity of a single user and the system and to reduce the delay, thus better deploying multimedia services and transmitting packets. This is a new technology for improving the uplink transmission rate introduced by 3GPP R6. It adopts fast scheduling of Node B, HARQ in the physical layer, soft handoff and 2-ms TTI short frame transmission technologies. Theoretically, it supports a rate of up to 5.76 Mbps.

HSUPA primarily adds an enhanced-dedicated channel (E-DCH). It adds the following physical channels in the physical layer: an E-DCH dedicated physical control channel (E-DPCCH) and an E-DCH dedicated physical data channel (E-DPDCH) on the uplink, and an E-DCH absolute grant channel (E-AGCH), an E-DCH relative grant channel (E-RGCH) and an E-DCH HARQ acknowledgement indicator channel (E-HICH) on the downlink. The uplink E-DPDCH is adapted to carry data of HSUPA users on the uplink, and the uplink E-DPCCH is adapted to carry and demodulate the associated signaling on the E-DPDCH. The downlink E-AGCH is a common channel, and the cell in which the RL of a user's serving E-DCH resides directs the UE the maximum available transmission rate or power; the downlink E-RGCH is a dedicated channel and can adjust the uplink transmission rate of the UE at an interval of 2 ms; the downlink E-HICH is a dedicated channel and is adapted to check whether the data received by a user in the process is correct and report an Acknowledgement (ACK) information element and a Negative Acknowledgement (NACK) information element.

HSUPA supports soft handoff. The UE can establish E-DCHs with multiple cells. Each cell can have an E-RGCH and an E-HICH on the downlink, but each UE only receives absolute grant of the E-AGCH in a cell, which is called an HSUPA serving cell.

If the uplink and downlink services of the UE are carried over the E-DCH and HS-DSCH, the HSDPA serving cell of the UE and the HSUPA serving cell of the UE must be the same. In this case, the cell is called a high speed packet access (HSPA) serving cell.

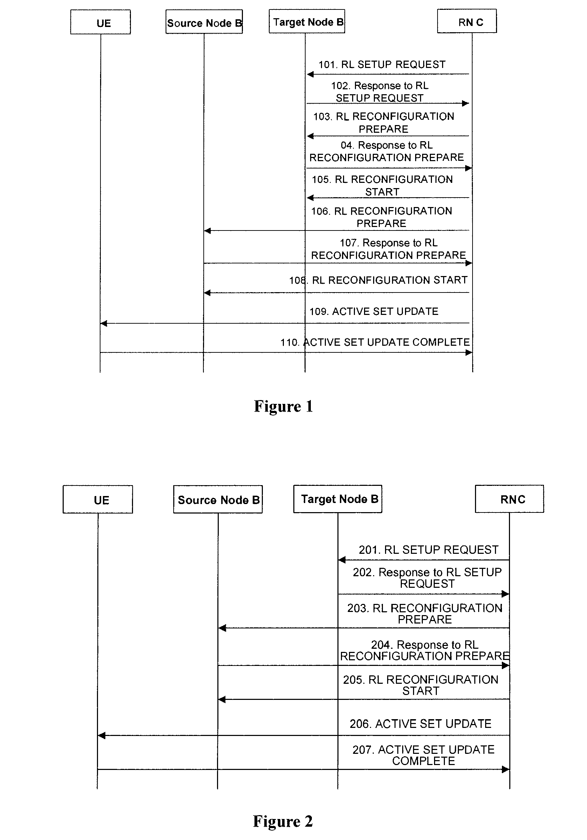

When the UE need be handed off from a cell of a Node B to a cell of another Node B, the UE usually adds soft handoff to the current active set and initiates a request for configuring the new cell to an HSUPA, or HSDPA or HSPA serving cell. Figure 1 shows the signaling flow at the network side.

101: An RNC sends an RL SETUP REQUEST to the target Node B to set up an RL in a cell of the target Node B for the UE.

102: The RNC receives RL SETUP RESPONSE from the target Node B.

103: The RNC initiates reconfiguration of the RL for the target Node B and notifies the target Node B of configuring the new cell to an HSPA serving cell via an RL RECONFIGURATION PREPARE signaling.

104: The RNC receives an RL RECONFIGURATION READY information element from the target Node B.

105: The RNC sends an RL RECONFIGURATION COMMIT signaling containing a Connection Frame Number (CFN) to the target Node B.

The CFN is unified timing for the UE, RNC and Node B based on a dedicated radio frame. It specifies a CFN time in which the UE, RNC and target Node B simultaneously change the target Node B cell as the serving cell according to the parameter in the RL RECONFIGURATION PREPARE signaling. The value of CFN ranges from 0 to 255.

106: The RNC sends the parameter for setting the cell of the original Node B to a non-HSPA serving cell to the original Node B via an RL RECONFIGURATION PREPARE Signaling.

107: The RNC receives an RL RECONFIGURATION READY Signaling from the original Node B.

108: The RNC sends an RL RECONFIGURATION COMMIT signaling containing the CFN to the original Node B.

At the CFN time, the original Node B stops using the cell as the serving cell.

109: The RNC sends an RL ACTIVE SET UPDATE signaling to the UE to notify the UE of starting using the new cell as the serving cell at the CFN time.

110: Upon updating the RL active set by the UE, the UE reports to the RNC an ACTIVE SET UPDATE COMPLETE information element.

It can be seen that the prior serving cell update flow in the target Node B covers two steps, that is, setting up an RL in the new cell and updating the serving cell through the reconfiguration signaling. As a result, at least 5 signalings need to be interacted between the RNC and Node B, thereby wasting the transmit resources and lowering the flow efficiency. The interaction signalings may prolong the time needed for updating the serving cell, reduce the service throughput and even cause the failure of the soft switch.

### Summary of the Invention

An embodiment of the present invention provides a method and apparatus for updating a serving cell to simplify the serving cell update flow in which the UE need be handed off from a cell of a Node B to a cell of another Node B and to reduce the number of signaling flows in the system and waste of resources.

To achieve the preceding purpose, an embodiment of the present invention provides a method for updating a serving cell. The method includes: receiving an Radio Link, RL, SETUP REQUEST including a serving cell update time from Radio Network Controller, RNC; and handing off a Node B cell into a serving cell at the update time according to the Radio Link SETUP REQUEST.

Preferably, an embodiment of the present invention further provides a apparatus for updating a serving cell. The apparatus includes: an RNC Radio Link, RL, SETUP unit, adapted to interact signalings with a Node B to set up an RL; and inform a serving cell update time to a Node B via sending an RL SETUP REQUEST; and an RNC serving cell update unit, adapted to hand off a serving cell into the Node B cell according to the update time.

An embodiment of the present invention further provides another serving cell control apparatus, including: a Node B Radio Link, RL, setup unit, adapted to interact signalings with the Radio Link Controller, RNC, including receiving a serving cell update time carried in an RL SETUP REQUEST ; and a Node B serving cell update unit, adapted to hand off a Node B cell into a serving cell at the serving cell update time.

In the embodiments of the present invention, the Node B is notified of the serving cell update CFN in the RL setup request signaling; therefore, the embodiments of the present invention omit the signaling interaction process of the target Node B RL reconfiguration, meanwhile simplify the signaling flow of the target Node B during the serving cell update, fully meet the requirements of the prior art in terms of functions, and improve the processing speed of the serving cell, shorten the delay of the signaling processing of the whole system without affecting the service throughput and soft switch.
The decrease on the interaction signaling saves the transmit resources.

### Brief Description of the Drawings

Figure 1 is a flowchart showing the serving cell handoff in the communication system in the prior art;

Figure 2 is a flowchart showing an embodiment of a method for updating a serving cell in the present invention; and

Figure 3 is structural diagram showing an embodiment of a system for updating a serving cell in the present invention.

### Detailed Description of the Invention

The following further describes the present invention in detail based on figures to make the purpose, technical scheme and advantages of the invention more clear.

An embodiment of the present invention may be realized by adding an optional serving cell update CFN information element in an RL SETUP REQUEST, including the updated CFN of the serving cell to indicate that a Node B updates the Node B cell into a serving cell at the time indicated by the serving cell update CFN. When the UE is handed off to a new cell of a Node B or to a cell of the target Node B, if the serving cell need be updated to the cell of the target Node B, the serving cell update CFN information element in the RL SETUP REQUEST is valid and the RNC sets the time in which the Node B starts updating the serving cell according to the serving cell update CFN information element.

When the serving cell update CFN information element is optional, the RNC may realize to inform the Node B whether to update the serving cell by including or excluding the serving cell update CFN information element in the RL SETUP REQUEST. In other words, if the received RL SETUP REQUEST includes the serving cell update CFN information element, the Node B not only sets up the RL according to the RL SETUP REQUEST, but also hands off the Node B cell into serving cell according to the time indicated by the serving cell update CFN information element; if the serving cell update CFN information element is not included in the RL SETUP REQUEST, as in the prior art, the Node B only sets up the RL according to the RL SETUP REQUEST without handing off the Node B cell into the serving cell.

If the RL SETUP REQUEST includes not only the serving cell update CFN information element, but also the corresponding serving RL information, the serving cell update CFN information element in the RL SETUP REQUEST is valid; when the RL SETUP REQUEST includes the serving cell update CFN information element but not the corresponding serving RL information, the serving cell update CFN information element is invalid and the Node B returns the response of failure.

Figure 2 shows the flow in which the serving cell is updated between Node Bs in an embodiment of the present invention.

201: The RNC sends an RL SETUP REQUEST containing a serving cell update CFN information element, which is configured to notify the time for updating the serving cell, to the target Node B to set up an RL for a UE in a cell of the target Node B.

202: The RNC receives an RL SETUP RESPONSE from the target Node B.

If the serving cell update CFN information element in the RL SETUP REQUEST is valid, the target Node B activates the resources allocated for the new serving RL at time indicated by a next coming CFN.

If the serving cell update CFN information element in the RL SETUP REQUEST is valid but there is no corresponding serving RL information in the RL SETUP REQUEST, the target Node B returns an RL SETUP FAILURE message to the RNC.

203: The RNC sends the parameter for setting the original cell in the Node B to a non-HSPA serving cell to the original Node B via an RL RECONFIGURATION PREPARE signaling.

204: The RNC receives an RL RECONFIGURATION READY signaling from the original Node B.

205: The RNC sends an RL RECONFIGURATION STARTUP signaling containing the serving cell update CFN information element to the original Node B.

At the time indicated by the serving cell update CFN information element, the original Node B stops using the original Node B cell as the serving cell.

206: The RNC sends an RL ACTIVE SET UPDATE to the UE to notify the UE to hand off the target Node B cell into the serving cell at the time indicated by the serving cell update CFN information element.

207: Upon updating the RL active set, the UE reports an ACTIVE SET UPDATE COMPLETE to the RNC.

Those skilled in the art are able to understand that all or part of the steps in the above method embodiments are realized through instructing the related hardware by the program; the program may be stored in a readable storage medium of a computer; when being executed, the program may include all or part of the steps in the above method embodiments. The storage medium may be read-only storage medium, random access memory, magnetic disc, compact disc, etc.

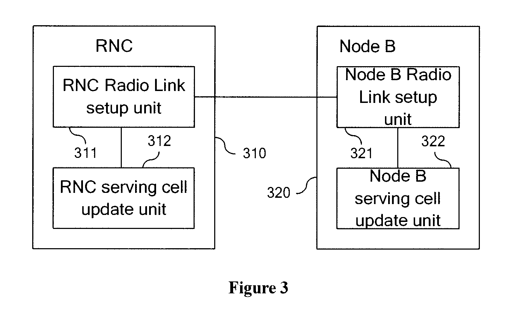

An embodiment of a system for updating a serving cell of the present invention may have the structure as shown in Figure 3.

An RNC 310 includes an RNC RL SETUP REQUEST unit 311 and an RNC serving cell update unit 312; a Node B 320 includes a Node B RL SETUP unit 321, a Node B serving cell update unit 322, and the Node B 320 may further comprise a CFN unit 323.

The RNC RL SETUP unit 311 interacts with the Node B RL SETUP unit 321 for RL signaling. The signaling includes RL SETUP REQUEST sent by the RNC 310 and the response to the RL REQUEST sent by the Node B 320. The RNC RL SETUP unit 311 informs the Node B 320 of the serving cell update time via sending the RL SETUP REQUEST; the RNC serving cell unit 312 updates the serving cell into the Node B 320 cell at the serving cell update time.

When the received RL SETUP REQUEST includes serving cell update time, the Node B RL SETUP unit 321 outputs the parameters related to the serving cell handoff in the RL SETUP REQUEST, including the serving cell update time, to the Node B serving cell update unit 322. The Node B serving cell update unit 322 hands off the Node B cell into a serving cell at the serving cell update time according to related parameters in the RL SETUP REQUEST.

The serving cell update time is often represented by the serving cell update CFN and the time which corresponds to the serving cell update CFN is the serving cell update time. The RNC 310 may add a CFN information element into the RL SETUP REQUEST, carrying the serving cell update CFN; the serving cell update CFN information element may be an optional cell in the RL SETUP REQUEST.

The RNC 310 may include the serving cell update CFN information element in the RL SETUP REQUEST if the Node B 320 is needed to update the serving cell, and meanwhile include the corresponding serving RL information in the request; if the Node B 320 is not needed to update the serving cell, the CFN is not included in the RL SETUP REQUEST.

The Node B RL SETUP unit 321 of the Node B 320 may include link information module. If the Node B RL SETUP unit 321 receives the RL SETUP REQUEST including the serving cell update CFN, the link information module detects the validity state of the serving cell update CFN, that is, detecting whether the RL SETUP REQUEST includes the serving RL information corresponding to the serving cell update; if yes, the parameters related to the serving cell handoff in the RL SETUP REQUEST, including serving cell update time, are output to the Node B serving cell update unit 322; if no, the Node B RL SETUP unit 321 returns the response of failure to the RNC 310.

Because all the reconfiguration ready signalings in the prior art are included in the information element structure of the RL SETUP REQUEST, and in the prior art, when the serving cell updates, the valid parameter in the reconfiguration signaling includes only the serving cell update CFN. Therefore, in the embodiment of the present invention, the serving cell update CFN is added into the RL SETUP REQUEST to simplify the Node B signaling flow, which fully meets the requirements of the prior art in terms of functions, and improves the processing speed of the serving cell, shortens the delay of the signaling processing of the whole system without affecting the service throughput and soft switch. The decrease on the interaction signaling saves the transmit resources.

The preceding update of the serving cell may be the update of an HSDPA serving cell, or an HSUPA serving cell or an HSDPA and HSUPA serving cell, that is, an HSPA serving cell, depending on the presence of HSDPA and HSUPA related IEs in the RL SETUP REQUEST.

It should be appreciated that the foregoing is only preferred embodiments of the invention and is not for use in limiting the invention. Any modification, equivalent substitution, and improvement without departing from the spirit and principle of this invention should be covered in the scope of protection of the invention.

## Claims

1. A method for updating a serving cell, comprising:
receiving an Radio Link, RL, SETUP REQUEST including a serving cell update time from Radio Network Controller, RNC; and
handing off a Node B cell into a serving cell at the update time according to the Radio Link SETUP REQUEST.

2. The method for updating a serving cell according to claim 1, wherein:
the RL SETUP REQUEST comprises a serving cell update Connection Frame Number, CFN, information element which carries the serving cell updated CFN, the update time is the time indicated by the serving cell update CFN.

3. The method for updating a serving cell according to claim 2, wherein the RL SETUP REQUEST further comprises valid state of the serving cell update CFN information element; the handing off a Node B cell into a serving cell comprises:
handing off the Node B cell into the serving cell at the time indicated by the serving cell update CFN information element if the serving cell update CFN information element is valid.

4. The method for updating a serving cell according to claim 3, wherein, if the serving cell update CFN information element is valid, the method further comprises:
activating, by the Node B, the allocated resources for a new serving RL at the time indicated by a next coming serving cell update CFN.

5. The method for updating a serving cell according to claim 3, wherein, if the serving cell update CFN information element is invalid, the method further comprises:
setting up an RL of the Node B cell, but not handing off the Node B cell into the serving cell.

6. The method for updating a serving cell according to claim 2, the method further comprises:
sending an RL SETUP RESPONSE to the RNC; and
sending, by the RNC, an RL Active Set Update to a user equipment so as to the user equipment hand off the Node B cell into the serving cell at the time indicated by the serving cell update CFN.

7. The method for updating a serving cell according to any one of the claims 1-6, the method further comprises: returning an RL SETUP FAILURE RESPONSE to the RNC, if the RL SETUP REQUEST does not contain a serving RL information corresponding to the serving cell update.

8. The method for updating a serving cell according to claims 1, wherein the serving cell is High Speed Downlink Packet Access serving cell, High Speed uplink Packet Access serving cell or High Speed Packet Access serving cell.

9. A apparatus for updating a serving cell, comprising:
an RNC Radio Link, RL, SETUP unit, adapted to interact signalings with a Node B to set up an RL; and inform a serving cell update time to a Node B via sending an RL SETUP REQUEST; and
an RNC serving cell update unit, adapted to hand off a serving cell into the Node B cell ac cording to the update time.

10. The apparatus for updating a serving cell according to claim 9, wherein the RL SETUP REQUEST comprises a serving cell update Connection Frame Number, CFN, information element which carries the serving cell updated CFN, the update time is the time indicated by the serving cell update CFN.

11. The apparatus for updating a serving cell according to claim 9, wherein the apparatus is RNC.

12. A apparatus for updating a serving cell, comprising,
a Node B Radio Link, RL, setup unit, adapted to interact signalings with the Radio Link Controller, RNC, including receiving a serving cell update time carried in an RL SETUP REQUEST; and
a Node B serving cell update unit, adapted to hand off a Node B cell into a serving cell at the serving cell update time.

13. The apparatus for updating a serving cell according to claim 12, wherein the RL SETUP REQUEST comprises a serving cell update Connection Frame Number, CFN, information element which carries the serving cell updated CFN, the update time is the time indicated by the serving cell update CFN.

14. The apparatus for updating a serving cell according to claim 13, wherein, the Node B RL setup unit further comprises a link information module, adapted to detect whether the RL SETUP REQUEST contains an serving RL information corresponding to the serving cell update; if yes, outputting, by the Node B RL setup unit, the serving cell update time to the serving cell update unit; if no, returning, by the Node B RL setup unit, an RL SETUP FAILURE RESPONSE.

15. The apparatus for updating a serving cell according to claims 12, wherein the apparatus is Node B.
